# EUROPEAN PATENT APPLICATION

(11) **EP 2 555 018 A1**
(43) Date of publication of application: **06.02.2013**
(21) Application number: 11176093.0
(22) Date of filing: 01.08.2011
(51) Int. Cl.: G01T 1/29, G03B 42/04, G03C 5/16

(54) **A dental radiological unit**

(71) Applicant: Nical S.p.A., 20125 Milano (IT)
(72) Inventor: Niccolucci, Roberto, 20124 Milano (IT)
(74) Representative: Lunati & Mazzoni S.r.L.

(57) **Abstract**

It is provided a dental radiological unit (1) adapted to be disposed in a device (100) for carrying out a panoramic dental radiography, said unit (1) comprising: a plate (2) adapted to be exposed to a photon beam emitted by said device (100) when the plate (2) is disposed in the unit (1); a cylinder (4) on which the plate (2) is disposed; and a motor (4b) adapted to rotate the cylinder (4) and plate (2) around an axis (4a) relative to said unit (1), enabling at least one angular sector of the plate (2) to be exposed to the photon beam; and a holding structure (3) for at least partly housing the aforesaid elements.

## Description

The present invention relates to a dental radiological unit of the type pointed out in the preamble of the first claim.

In particular, the radiological unit, also referred to as radiological cassette, is adapted to be used for executing an orthopantomography, commonly known as panoramic radiography of the dental arches, which is a radiographic technique supplying a diagnostic image of the teeth, the dental arches and the upper (maxilla) and lower (mandible) jaw bones on a single film.

It is known that presently the devices used for an orthopantomography comprise a ray emitter, usually an X-ray emitter, a radiological unit containing an image receptor, the images being sensitive to said rays, and a supporting structure adapted to support said elements. In particular, the supporting structure allows the emitter and radiological unit to be placed on the opposite side relative to the patient's head moving them by a rotating motion, the rotation centre being the patient's head itself. Finally, to ensure the head's correct position and immobility, the device is provided with suitable locking elements, such as supporting parts, usually disposed at the ears, or a fixing point covered with sterile plastic material adapted to be pressed between the patient's teeth.

In fact, during accomplishment of the diagnostic test it is very important that the correct position and immobility of the head be ensured in such a manner that the patient's dental arch be inside a limited area of sharp focusing. This aspect results from the fact that the ray beam, due to a lens, is of the conical type and has a focusing point identifying the sole quality region in the radiography, i.e. the only area adapted to be clearly represented by the captured image. Therefore, in addition to the aforesaid locking elements, in the device the emitter and unit motion has to be carried out in such a manner that the dental arches, in spite of the fact that the shape of same varies from patient to patient, will be always in the focused region.

For the above reason, one of the most important elements is the radiological unit the main element of which is the image receptor that, due to the necessity of maintaining the focus on the dental arch, has an arched shape.

By the expression "image receptor" it is intended the combination of two intensification screens. A film is disposed between the two screens and the whole is enclosed in a usually stiff light-resistant protective container, referred to as cassette. Each intensification screen contains a phosphor layer becoming fluorescent when activated by the X-rays penetrating through the patient and the cassette and determining the film exposure.

Alternatively, in the intraoral radiographs the image receptor usually consists of the film that is directly exposed to the X-rays.

In conclusion, the orthopantomography contemplates that at the beginning the patient is positioned in a correct manner relative to the unit and the X-ray emitter and then the radiography is made. The emitter is activated and simultaneously the emitter and radiological unit are set in rotation, i.e. the two aforesaid components are moved in such a manner that the X-ray focus travels over the whole dental arch while being always in the vicinity of same.

When this process has been completed, the radiological unit is then manually extracted from the device, brought to suitable developing machines and inserted thereinto. The developing machine automatically carries out extraction of the plate from the unit, reading of same and placement into the unit again.

In particular, the plate, once extracted from the cassette, is struck by a light beam, such as a laser, and then emits a plurality of particles, photons for example, that are collected by a suitable element and enable the diagnostic image to be reconstructed. In addition, during the reading process, the previously captured image is removed from the plate and therefore, as the unit comes out of the machine, reuse of same is made possible.

The known art mentioned above has some important drawbacks.

In fact, due to the continuous movements both of the plate and the unit, the plate is submitted to scratching and generally to deterioration, which will lower the radiographic quality and make it necessary to frequently replace the plate thus bringing about cost increases.

A further problem is due to the slowness in the process caused by the long duration of the down time periods, resulting from the necessity to move the unit between different environments.

In addition, the developing machines are characterised by great bulkiness and high costs. Therefore use of plates of high quality is disadvantageous as the examination costs become very high.

In addition, due to lack of suitable controls and checks on the developing conditions and exposure times, the patient may receive an unnecessary even high dose of radiation, which often causes deterioration of the image quality, such as in case of overexposed radiographs.

In addition, the particular shape of the dental arch creates plate regions where exposure is not optimal. Therefore image regions are created where reading and analysis become difficult.

Finally, there are other techniques for execution of radiographic examinations. In one of them use of a particular plate is provided which comprises complex electronic elements adapted to analyse the diagnostic image, such as a "photodiode stripe" or a stripe-shaped photodiode array. In this case, the diagnostic image is reprocessed by said electronic elements that are adapted to provide a diagnostic image directly on a screen.

These systems however are not often used due to the high cost both of manufacture and maintenance. In addition, said plates have a relatively short duration and are characterised by a poor-quality diagnostic image and often the test must be repeated for insufficient diagnostic information.

Under this situation, the technical task underlying the present invention is to conceive a dental radiological unit capable of substantially obviating the mentioned drawbacks.

Within the scope of this technical task, it is an important aim of the invention to accomplish a dental radiological unit adapted to carry out radiographic tests in a quick and cheap manner.

Another important aim of the invention is to avoid useless handling that, in addition to increasing the time utilised for an examination, cause deterioration of the plate.

A further aim of the invention is therefore to ensure e long duration of the plate, i.e. to increase the number of analyses that can be carried out with a single plate.

A still further aim of the invention is to accomplish a radiological unit adapted to ensure the high quality of the whole image.

An additional aim of the invention is to conceive a dental radiological unit of smaller bulkiness and reduced cost that is adapted to carry out development of the diagnostic image and cleaning of the plate.

The technical task mentioned and the aims specified are achieved by a dental radiological unit as claimed in the appended claim 1.

Preferred embodiments are highlighted in the sub-claims.

The features and advantages of the invention are hereinafter clarified by the detailed description of a preferred embodiment of the invention, with reference to the accompanying drawings, in which:
**Fig. 1** is an internal view of the dental radiological unit according to the invention;
**Fig. 2** is an internal top view of the dental radiological unit;
**Fig. 3** represents an external view of the dental radiological unit according to the invention;
**Fig. 4** shows a particular component of the dental radiological unit; and
**Fig. 5** reproduces a device provided with the dental radiological unit.

With reference to the drawings, the dental radiological unit according to the invention is generally identified by reference numeral **1.**

It is adapted to be used for making an orthopantomography, i.e. a panoramic radiography of the dental arches of a patient. Unit 1 is therefore adapted to be disposed on known devices for dental radiology and, in particular, devices carrying out a panoramic radiography.

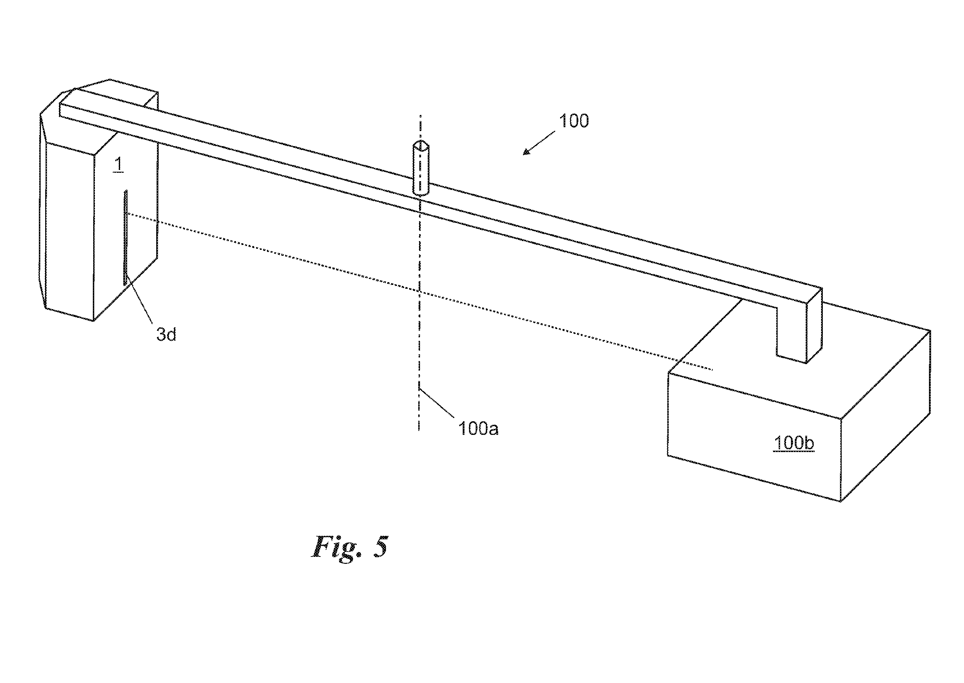

In addition to said unit 1, the device **100** in known manner comprises an emitting apparatus **100a,** disposed at a position diametrically opposite to unit 1 relative to the dental arch to be analysed and adapted to emit a photon beam to which a plate **2** placed in unit 1 is exposed. Device 100 also comprises a mechanism adapted to simultaneously set in rotation the radiological unit 1 and apparatus 100a around a rotation axis **100b** passing in the vicinity of said arch, as shown in Fig. 5.

The dental radiological unit 1 briefly comprises plate 2, adapted to be exposed to the photon beam emitted by device 1, a holding structure **3,** adapted to receive the elements constituting unit 1, and a cylinder **4** to the outer surface of which plate 2 is secured.

Plate 2 has the same physico-chemical features as those known and appears to be of rectangular shape; plate 2 is therefore adapted to be exposed to a photon beam emitted by any of the sources usually used in radiographic analyses. In particular, plate 2 is a photosensitive-phosphor plate, commonly referred to as "imaging plate".

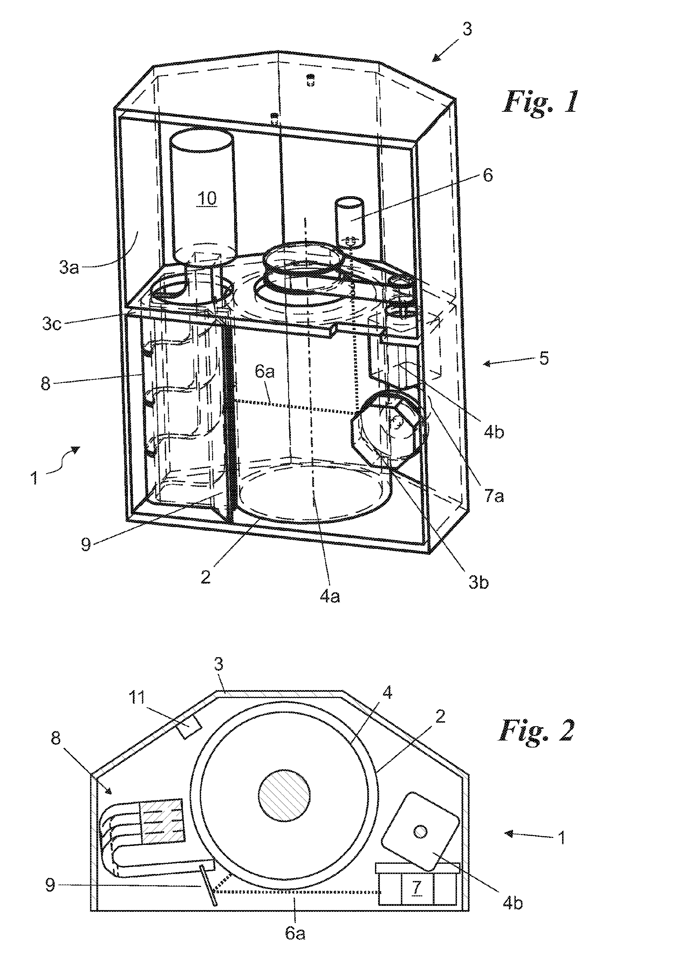

The holding structure 3 is box-shaped and defines a volume in which the components of the dental radiological unit 1 are placed. In particular, said inner volume is divided into two chambers, an upper chamber **3a** and a lower chamber **3b,** separated from each other by a wall **3c** (Fig. 1).

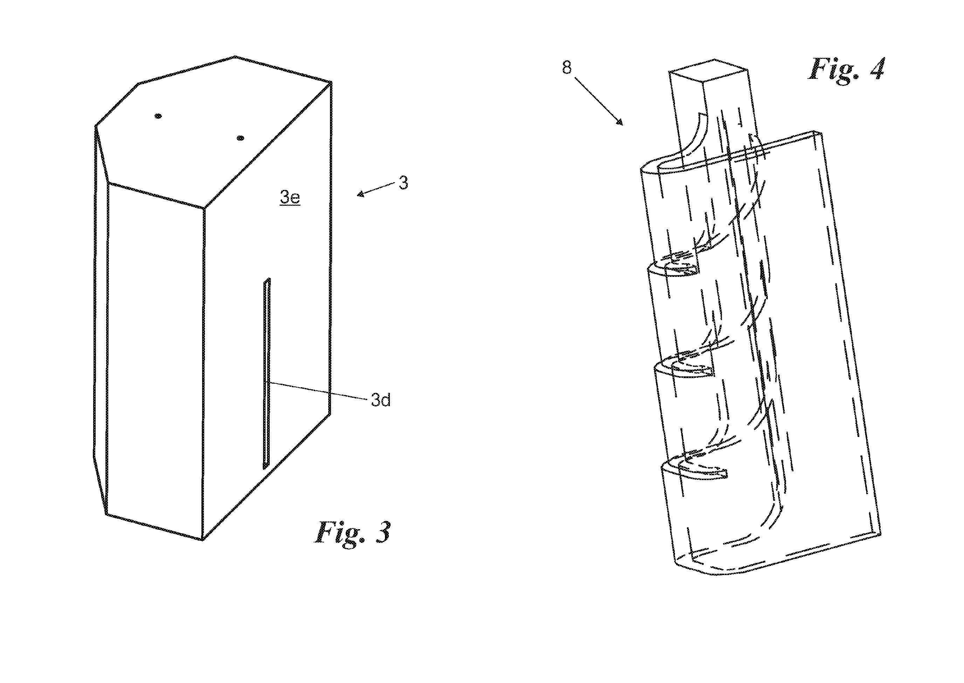

In order to enable exposure of plate 2, said structure 3 is provided with a cut **3d,** shown in Fig. 3, i.e. a slit made at the cylinder 4, enabling the phonon beam to enter structure 3 so that an angular portion of plate 2 is exposed. The expression "angular portion" means the portion of plate 2 that is hit instant by instant by the photon beam.

Structure 3 preferably has a prismatic shape, the prism having a base in the form of an irregular hexagon and an extension direction substantially parallel to axis 100b. Finally, two side faces of said prism are parallel to the rotation axis 100b and the surface **3e** which is the closest to said axis 100b is provided with the cut 3d.

The cylinder **4** is preferably placed in the lower chamber 3b, is almost fully surrounded by said plate 2 and is adapted to be set in rotation by a motor **4b** around a revolution axis **4a** substantially parallel to the rotation axis 100b. Rotation of cylinder 4 enables plate 2 to be driven in rotation around the revolution axis 4a allowing the photon beam entering through slit 3d, to hit at least one angular sector of plate 2, i.e. to hit at least the part of plate 2 equivalent to the dental arch. In particular the angular sector is almost coincident with the whole plate 2. The dental radiological unit 1 advantageously comprises a development block **5** adapted to develop plate 2 when it is inside unit 1 and substantially placed on said closest surface 3e.

The development block 5 comprises an emitter **6** adapted to emit a light ray **6a** striking on plate 2, an orienting group **7** adapted to orient the light ray 6a along a plane parallel to the revolution axis 4a, a reception element **8** adapted to pick up the particles produced by the light ray 6a when it hits said plate.

In particular, the light ray 6a emitted by emitter 6, is preferably a laser the frequency of which is suitable to enable excitation of the particles constituting plate 2. In greater detail, the laser beam can be advantageously a red laser enabling production of blue light, i.e. blue photons, by plate 2 when the laser itself hits the plate.

Emitter 6 is suitably housed in the upper chamber 3a disposed in the vicinity of a corner of the holding structure 3 in such a manner that the ray 6a produced thereby has a direction lying in a plane parallel to the revolution axis 4a.

The orienting group 7, adapted to deviate the light ray 6a along a plane almost parallel to surface 3a, is in the form of a right prism with a polygonal base the side surfaces of which are almost perpendicular to surface 3a and are adapted to reflect the light ray 6a along said plane. In particular, the base of the orienting group 7 has a motor **7b** disposed over said group and adapted to set it in rotation along an axis substantially perpendicular to surface 3e enabling the angle of incidence of the light ray 6a on the group itself to be varied. In conclusion, rotation of the orienting group 7 modifies the direction of ray 6a coming out of the component itself enabling the ray to hit plate 2 almost over the whole length thereof, i.e. the whole height of cylinder 4.

In order to limit the length variation in the travel of the light ray 6a, the maximum inclination of the ray itself is required to be reduced during operation of unit 1. To this aim the dental radiological unit 1 has at least one mirror **9** secured to structure 3 and adapted to deviate the light ray 6a in such a manner that, when it hits plate 2, it has a direction almost perpendicular to the revolution axis 4a.

Use of at least one mirror 9 allows reduction of the maximum angle of incidence of the light ray 6a on the reflecting component **7a** necessary to enable the ray itself to hit plate 2 over the whole width thereof. In fact, due to mirrors 9, the travel run by ray 6a before striking on plate 2 is increased and therefore said maximum angle of incidence is reduced. For better understanding this concept, it is sufficient to think about a triangle, an isosceles triangle for example, and to see that the summit angle thereof varies as a function of the height, the base length being the same.

Mirror 9 is preferably only one and is placed on surface 3e on the opposite side of cylinder 4 relative to the orienting group 7. It is disposed in front of the orienting group 7 and directs the light ray 6a against plate 2. In particular, arrangement of mirror 9 is of such a nature that the light ray 6a, coming out of said mirror has a direction almost perpendicular to axis 4a and, therefore, hits plate 2 in a direction substantially perpendicular to the plate itself.

The reception element 8 is adapted to pick up the particles produced by excitation of plate 2 and therefore is advantageously disposed in the vicinity of plate 2 and, more specifically, of that part of plate 2 that is hit by the light ray 6a. In particular element 8 is adapted to pick up the blue photons produced by the red laser when it intercepts plate 2.

It is adapted to internally carry the particles from an inlet surface **8a** to an outlet surface **8b,** as shown in Fig. 4. The inlet surface 8a is placed in the vicinity of the aforesaid part of plate 2 and defines the inlet section of the particles produced through excitation of plate 2 by the light ray 6a, while the outlet surface 8b represents the area where said particles come out of element 8. In particular, surface 8a is almost parallel to the revolution axis 4a, while the outlet surface 8b is substantially perpendicular to the inlet surface.

This particle transport by the reception element 8 is obtained due to the particular profile of the element itself that allows the presence of an angle of incidence between the particles and the element walls greater than the critical angle, i.e. the minimum angle necessary for complete reflection of the particles, according to the known phenomenon also exploited in the case of optical fibres. The reception element 8, represented in Fig. 4, comprises two components: an intercepting component **8c** defining the inlet surface 8a, and a transition component **8d** defining the outlet surface 8b and integral with the intercepting component 8c. The intercepting component 8c is preferably in the form of a prism and has the upper face constituting the inlet surface 8b, the face close to plate 2 and parallel to the revolution axis 4a, of rectangular shape and having such sizes that it covers plate 2 almost over the whole height thereof.

The transition component 8d is made up of a plurality of thin sheets or foils **8e** having rectangular base and suitably shaped profile. In particular the profile of said foils 8e, by ensuring an angle of incidence of the particles greater than the critical one, enables the particles entered from a first base integral with the intercepting component 8c to run at the inside thereof, then coming out of foil 8e through the second base defining a portion of the outlet surface 8b.

In particular, element 8 is preferably made of polymethylmethacrylate or similar material adapted to perform the above described functions.

The development block 5, in addition to the above components, has a reading apparatus **10** adapted to analyse the particles collected by the reception element 8, and a removal means **11** adapted to clean plate 2 enabling subsequent reuse of same, i.e. adapted to eliminate the radiographic image on plate 2.

The reading apparatus 10 is disposed in the upper chamber 3a in the vicinity of the outlet surface 8b and is adapted to collect the particles coming out of said surface and transmit the collected data to a computer or other system suitable to provide a graphic representation of the examined dental arch.

This reading apparatus 10 is preferably a photomultiplier or other similar device adapted to amplify the input signal linked to said particles, so as to ensure a high analysis quality.

The removal means **11** (Fig. 2) placed in the lower chamber 3b, comprises a plurality of LEDs adapted to emit a particular light capable of deleting the image captured on plate 2. In detail the LEDs are secured to structure 3 and, more specifically, are disposed over the whole width of plate 2.

Preferably, the removal means 11 is disposed in such a manner that a plate portion 2 during its rotation, first meets the photon beam, then block 5. It is therefore placed between the orienting group 7 and the reception element 8 on the opposite side relative to slit 3. This arrangement allows plate 2 to come to slit 3d advantageously devoid of the previously captured image.

In conclusion arrangement of block 5 and of the removal means 11 makes a plate portion carry out said sequence of movements in such a manner as to form a round angle.

Operation of a dental radiological unit described above as regards structure is the following.

At the beginning, the patient is suitably positioned relative to device 100 and then said device 100 and the members belonging to unit 1 are activated. Therefore, the device sets unit 1 and the emitting apparatus 100 in rotation around the rotation axis 100b, said emitting apparatus 100 starting to emit the photon beam, while the cylinder starts rotating around axis 4a setting plate 2 in motion.

In particular, the photon beam passes through the patient and, through slit 3d, enters structure 3 so that plate 2 is exposed. In greater detail, device 1 is adapted to adjust the distance between the patient and said two elements, i.e. unit 1 and apparatus 100a, making the focus of the photon beam be substantially coincident with the dental arch during the whole analysis.

Plate 2 is advantageously submitted to two independent rotation motions, one around axis 100a and one around the revolution axis 4a. This feature enables the movements of plate 2 to fit the particular analysis conditions that, as they continuously vary, could otherwise cause the quality decay of the image captured on the plate.

Then a first angular portion of plate 2 is exposed, which portion, due to rotation about the revolution axis 4a, reaches the development block 5 thus starting reading of a first angular plate portion, while exposure on a second plate portion 2 is being carried out.

The light ray 6a emitted by emitter 6 and suitably deviated by the orienting group 7 and mirrors 9, excites plate 2 producing particles, in particular blue photons, that are collected by the reception element 8. In particular, the particles enter element 8 through the inlet surface 8a, pass through it and come out of the outlet surface 8b coming close to the reading apparatus 10. Apparatus 10, based on the particles, sends a suitable signal to a computer analysing the signal and displaying the image of the dental arch on a screen or printing it.

Said portion, after being analysed by block 5, goes on rotating and comes to the removal means 11 that will delete the previously captured and analysed image. In particular, during removal of the image from the plate portion 2, the rest of plate 2 is exposed to the photon beam and/or analysed by block 5.

Finally, the plate portion 2, going on moving in rotation, completes the round angle, and again comes close to slit 3d where it can be exposed again.

The invention comprises a new process for carrying out a panoramic dental radiography through a device 100 provided with a dental radiological unit 1.

In the process an exposure step is provided in which an image is captured on said plate 2. In particular, the photon beam produced by apparatus 100a, passes through the dental arch to be scanned, enters through slit 3d, and exposes a first angular portion of plate 2.

During this step, cylinder 4 is set in rotation around the revolution axis 4a. This movement of cylinder 4 enables plate 2 to be moved in such a manner that the plate reaches the photon beam over the whole extension thereof thus enabling the whole plate to be exposed.

An angular portion of plate 2, after being exposed, comes close to the development block 5 and starts the plate reading step, in which said plate portion 2 is analysed by block 5, as previously described, i.e. the image captured thereon is read during the previous exposure step.

In particular, the angular portion of plate 2 is submitted to the reading step before carrying out a round angle during rotation of plate 2. In addition, while said angular portion is submitted to reading, a second portion is exposed, enabling the two exposure and reading steps to be at least partly overlapped. Once the reading step relating to said angular portion has been completed, the step of cleaning plate 2 is carried out, in which the angular portion, after being submitted to reading, is cleaned, i.e. the previously captured image is removed. In detail, the angular portion of plate 2 is submitted to the cleaning step before said angular potion carries out a round angle during rotation of plate 2. In particular, an angular portion of plate 2 is submitted to the whole process while it carries out a single round angle during its rotation. In other words, an angular portion, while carrying out a single revolution, is submitted first to the exposure step, to the reading step and finally to the cleaning step.

In conclusion, the advantageous possibility exists that the exposure, reading and cleaning steps be at least partly overlapped. Therefore, in a plate it is possible to have that simultaneously a first angular portion is cleaned, a second portion is read and a third portion is exposed.

The invention achieves important advantages.

In fact, the dental radiological unit 1 is adapted to carry out radiographic examinations in a quick and cheap manner. It enables the down time periods due to moving/handling of the unit and typical of presently known units to be avoided, which periods are required for reading and cleaning the plate 2.

This time reduction is further obtained due to the possibility of at least partly overlapping the exposure, reading and cleaning steps.

Another advantage resides in that the plate, as it is not removed from the unit, is not subjected to deterioration by rubbing and therefore has a long duration. As a result the possible number of analyses that can be executed with a single plate is increased and the analysis cost is reduced.

The longer duration of a plate 2 enables use of a plate of better quality, while maintaining reduced costs for the analysis.

An important advantage is the high quality of the whole image thus obtained with the dental radiological unit 1.

In fact, unit 1 allows an independent movement of plate 2, so that motion of plate 2 can be adapted, instant by instant, to the particular examination conditions.

The invention is susceptible of variations falling within the scope of the inventive idea. All details can be replaced by equivalent elements and the materials, shapes and sizes can be of any nature and magnitude.

## Claims

1. A dental radiological unit (1) adapted to be disposed in a device (100) for carrying out a panoramic dental radiography, said unit (1) comprising: a plate (2) adapted to be exposed to a photon beam emitted by said device (100) when said plate (2) is disposed in said unit (1); a holding structure (3) suitable to house said plate (2) at least partly, and **characterised in that** said plate (2) is disposed on a cylinder (4) at least partly placed in said holding structure (3) and **in that** it comprises a motor (4b) adapted to rotate said cylinder (4) and plate (2) around a revolution axis (4a) relative to said unit (1) in such a manner as to enable at least one angular sector of said plate (2) to be exposed to said photon beam.

2. A unit (1) as claimed in claim 1, wherein said holding structure (3) is provided with a cut or slit (3d) adapted to enable said photon beam to enter said unit (1).

3. A unit (1) as claimed in one or more of the preceding claims, comprising a development block (5) adapted to develop said plate (2) in said unit (1).

4. A unit (1) as claimed in claim 3, wherein said development block (5) comprises an emitter (6) adapted to emit a light ray (6a) striking on said plate (2), an orienting group (7) for orienting said light ray (6a) along a plane parallel to said revolution axis (4a), and a reception element (8) adapted to pick up the particles produced by said light beam (6a) when it hits said plate (2).

5. A unit (1) as claimed in claim 4, wherein said light ray (6a) is a red laser adapted to produce blue photons when it intercepts said plate (2).

6. A unit (1) as claimed in one or more of the preceding claims 3-5, comprising at least one mirror (9) adapted to deviate said light ray (6a) coming out of said orienting group (7) in a direction almost perpendicular to said revolution axis (4a).

7. A unit (1) as claimed in claims 3-6, wherein said reception element (8) defines an inlet surface (8a) placed in the vicinity of the plate (2) portion hit by said light ray (6a) and adapted to make said particles enter said reception element (8), and an outlet surface (8b) adapted to cause exit of said particles from said element (8), and wherein said element (8) is suitable to carry said particles from said inlet surface (8a) to said outlet surface (8b).

8. A unit (1) as claimed in claim 7, wherein said reception element (8) is made up of a plate having the base in the form of an isosceles right-angled triangle a cathetus of which is bent upon itself forming a spiral.

9. A unit (1) as claimed in one or more of claims 7-8, wherein said reception element (8) is made of polymethylmethacrylate.

10. A unit (1) as claimed in one or more of the preceding claims, comprising a removal means (11) adapted to clean said plate (2) enabling reuse of same.

11. A unit (1) as claimed in claim 10, wherein said removal means (10) comprises a plurality of LEDs.

12. A device for carrying out a panoramic dental radiography provided with a dental radiological unit (1) as claimed in one or more of the preceding claims.

13. A process for carrying out a panoramic dental radiography through a device (100) provided with a dental radiological unit (1) comprising a plate (2), said process comprising:
- an exposure step in which an image is captured on said plate (2), **characterised in that**
during said exposure step said plate (2) rotates relative to said unit (1) around a revolution axis (4a).

14. A process as claimed in the preceding claim, comprising a plate reading step, adapted to read an angular portion of said plate (2), after said angular portion has been submitted to said impression step and before said angular portion carries out a round angle during said rotation.

15. A process as claimed in the preceding claim, comprising a plate cleaning step, adapted to clean an angular portion of said plate (2) after said angular portion has been submitted to said reading step and before said angular portion carries out a round angle during said rotation.
